# EUROPÄISCHE PATENTSCHRIFT

(11) **EP 0 471 143 B1**
(45) Veröffentlichungstag und Bekanntmachung des Hinweises auf die Patenterteilung: **09.08.1995**
(21) Anmeldenummer: 91103027.8
(22) Anmeldetag: 28.02.1991
(51) Int. Cl.: E04H 7/06, B65D 90/08

(54) **Runder Behälter zur Aufnahme von feuchten, aggressiven Stoffen, insbesondere von Weich-, Keim- und Darreinrichtungen in Mälzereien**
Round container for containing wet and agressive materials, especially used for steeping, germinating and drying installations in malting houses
Réservoir rond pour contenir des matériaux humides, agressives en particulier appliqués dans des installations de trempage, de germination et de touraillage pour des malteries

(30) Priorität: 28.02.1990 DE 9002366 U
(43) Veröffentlichungstag der Anmeldung: 19.02.1992
(73) Patentinhaber: Hauner, Rudolf, Dipl.-Ing., D-91456 Diespeck (DE)
(72) Erfinder: Hauner, Rudolf, Dipl.-Ing., D-91456 Diespeck (DE)
(74) Vertreter: Götz, Otto, Dipl.-Ing., Pat. Ass.

(56) Entgegenhaltungen:
- DE-C- 219 777
- DE-C- 658 886
- FR-A- 1 360 688
- FR-A- 1 564 589
- FR-A- 2 097 475
- US-A- 1 451 967

## Beschreibung

Die Neuerung bezieht sich auf einen runden Behälter zur Aufnahme von feuchten, aggressiven Stoffen, insbesondere von Weich-, Keim- und Darreinrichtungen in Mälzereien.

Derartige Behälter sind im allgemeinen in Betonbauweise erstellt. Solche Behälter haben im Normalfall relativ große Inhalte und sind in Rundbauweise erstellt. Es ergeben sich dadurch natürlich erhebliche Belastungen, die einen großen Faktor bei den Baukosten darstellen. Wird ein derartiger Behälter in Betonbauweise erstellt, so entstehen häufig Schwierigkeiten in der Dichtheit und insbesondere hinsichtlich der Isolierung. Dies gilt besonders bei Weich-, Keim- und Darreinrichtungen, da dabei auch eine Wärmeisolierung erforderlich ist, beziehungsweise im anderen Falle der gesamte Baukörper aufgeheizt werden müßte. Ein Großteil dieser Schwierigkeiten wird durch den Aufbau der Behälter aus nichtrostenden Stahlblechen vermieden, jedoch entstehen insbesondere bei sehr großen Behältern zusätzliche Schwierigkeiten hinsichtlich des Aufbaus dieser Stahlbehälter und auch hinsichtlich des Transportes der einzelnen Elemente. Ferner kommen bei Stahlbehältern die Gefahr der Korrosion, insbesondere über längere Zeiträume hinweg, in Betracht. Dies erfordert meistens eine nicht unerhebliche Pflege dieser Stahlbehälter.

Diese Schwierigkeiten wurden zunächst, wie in der deutschen Offenlegungsschrift 36 15 175 dargestellt und erläutert, dadurch gelöst, daß der Mantel des zylindrischen Behälters aus unter sich gleichen Schalenelementen, deren Höhe im Verhältnis zur Erstreckung in Umfangsrichtung vorzugsweise relativ groß ist und der gesamten Stockwerkshöhe des Behälters entspricht, besteht, die vorgefertigt anlieferbar und auf der Baustelle baukastenartig durch Verbindungen an den senkrechten Kanten aneinanderreihbar sind. Da die außenliegenden Verstärkungen vorzugsweise aus anderem Material bestehen und unterschiedlichen Wärmeausdehnungskoeffizienten zum Mantelmaterial aufweisen entstehen thermische Verspannungen und Wärmebrücken, die Wärmeverluste verursachen.

Der Neuerung liegt die Aufgabe zugrunde, eine Methode anzugeben, um diese thermischen Verspannungen auszuschalten und Wärmebrücken zu vermeiden.

Diese Aufgabe wird bei einem Behälter der eingangs genannten Art gemäß der Neuerung dadurch gelöst, daß die Verbindung zwischen den Blechen und den Versteifungen über stumpf an die Außenseite der Bleche angeschweißte Bolzen erfolgt, die mit einem Gewindeteil durch vertikal verlaufende Langlöcher in den Profilen hindurchgreifen und dort mittels drehgesicherter Muttern, vorzugsweise unter Zwischenlage von wärmedämmenden Distanzelementen, verschraubt sind.

Auch die Deckenelemente sind dabei in gleicher Art gestaltet.

Dadurch wird die eingangs genannte Aufgabe gelöst, ohne daß die Innenseite des Behälters leidet.

Weitere vorteilhafte Ausgestaltungen des Anmeldungsgegenstandes gemäß der Neuerung finden sich in den Unteransprüchen.

Nachstehend wird die Neuerung anhand von in den Figuren dargestellten Ausführungsbeispielen erläutert.

Dabei zeigen:
- Figur 1: Querschnitt durch den Behälter (Schnitt V - V gemäß Figur 2)
- Figur 2: Grundriß des Behälters, bei dem in den vier Quadranten verschiedene Höhenschnitte gezeigt sind.
- Figur 3: eine Draufsicht auf einen Teilabschnitt der Decke und darunter einen Teilschnitt der zugehörigen Außenwand des Behälters.
- Die Figuren 4 und 5: die in Figur 3 angegebenen Ansichten X-X und XI-XI.

Grundsätzlich besteht der Behälter aus vorgefertigten Elementen. Die Blechteile bestehen vorzugsweise aus Chromnickelstahl. Der Mantel besteht aus einzelnen Schalen 1,
die im Profil c-förmig sind und parallel zur Behälterachse verlaufen. Die einzelnen Elemente bilden aneinandergereiht einen Kreisbogen, nämlich die Außenwand des Behälters selbst. Die Verbindungen der einzelnen Elemente bilden Mantellinien des Behälters. Da die Elemente alle gleich sind, sind sie leicht stapelbar und vorzugsweise als relativ schmale aber hohe Elemente, zum Beispiel bis zu 10 Meter hoch, ausgebildet. Alle erforderlichen Türen, Öffnungen, Rohrdurchführungen, Kabelverschraubungen sind bereits
vorgefertigt in die einzelnen Elemente eingearbeitet. Dies erhöht die Qualität nicht unerheblich und senkt Montagekosten.

Die Ränder der Elemente in Richtung der Höhe, also der Mantellinie, sind je nach der geforderten Tragfähigkeit des Behälters und der von der Decke her kommenden Zusatzlasten, mit senkrechten Stützprofilen mit angepaßtem Querschnitt versteift.

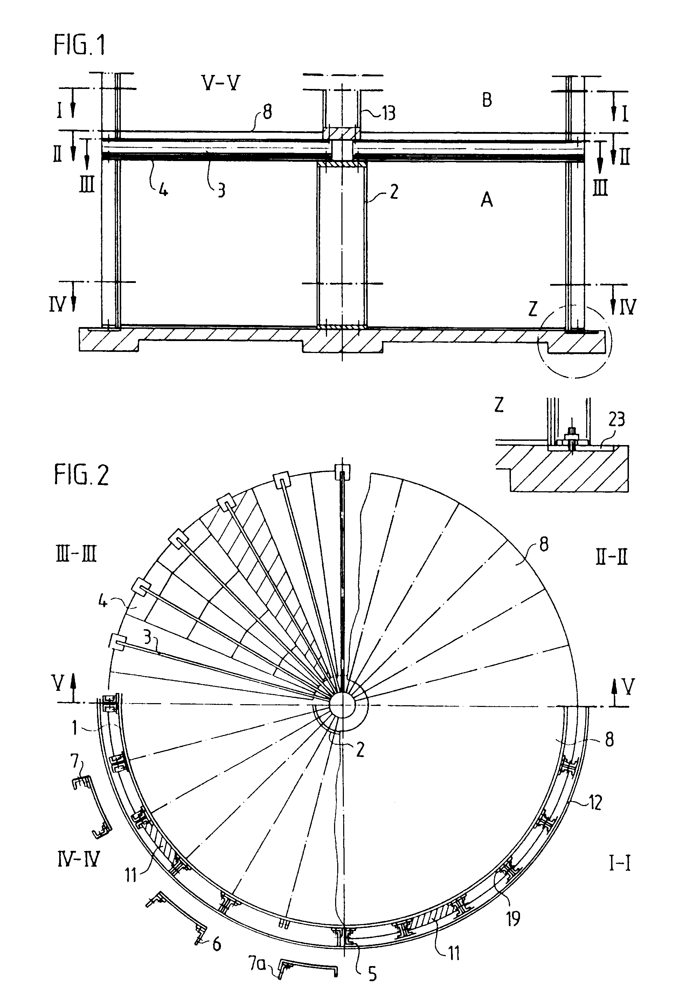

Insbesondere können Stabprofile, zum Beispiel L-Profile gemäß 6 in Figur 2 oder U-Profile gemäß 7 in Figur 2, zur Verstärkung verwendet werden. Die verschiedenen Möglichkeiten sind an der Peripherie des bereits erwähnten Quadranten in Figur 2 angedeutet.

Wie beim Beispiel 7a gezeigt, können die Bleche auch zusätzlich nach außen abgekantet sein.

Der Behälter kann auf einen ebenen Betonboden oder auch auf einen kegelförmig geneigten aufgebaut werden. Auch ein vorgefertigter Isolierboden ist möglich.

Die Decke besteht aus, auf den Stoßkanten der einzelnen Wandelemente 1 aufgelegten Trägern 3 in Doppel-T-Form. Dies geschieht hauptsächlich deshalb, weil die Belastung der Decke bei relativ großen Behältern, zum Beispiel bei 20 und mehr Metern im Durchmesser, sehr groß ist. Diese Träger verlaufen von den Außenkonturen des Behälters in Richtung zu einer tragenden Säule 2 in der Mitte des Behälters. Diese tragende Säule besteht aus einem Hohlzylinder, der mit Edelstahl beschichtet ist. Die tragende Säule soll so dimensioniert sein, daß sie in etwa ein Drittel der von der

Decke erbrachten Last aufnimmt. Hinzu kommt eventuell eine Zusatzbelastung aus darüberliegenden Geschossen

Dieses untere Geschoß beinhaltet in der Praxis eine Keim- oder Darreinheit. Ist nur ein Obergeschoß vorhanden, wie in der Zeichnung (Figur 1) durch Raum B angedeutet, wird dieser Behälter meist zum Weichen des Keimgutes verwendet. Bei mehr als einem Obergeschoß kann der Behälter B ebenfalls zum Keimen verwendet werden. Im Stockwerk darüber kann sich dann die eigentliche Weichvorrichtung befinden.

Die Decke besteht nicht nur aus diesen Doppel-T-Trägern zur Aufnahme der Last, sondern diese I-Träger 3 sind mit segmentartigen und vorzugsweise an den Stoßstellen aufgekanteten Edelstahlprofilen unterlegt. Die Träger verlaufen radial mittig zu den Segmenten und liegen außenseitig auf den Versteifungen 6, 7, 7a auf.

Diese Edestahlprofile bilden ähnlich wie die Schalenelemente den Mantel, letztendlich bei Aheinanderreihung in Umfangsrichtung die geschlossene Decke. Hierzu werden die Ränder der Aufkantungen miteinander verschweißt (15). Vor der Verschweißung kann ein Verpunkten oder eine Vorbefestigung durch Zwingen erfolgen. Vorteilhaft werden diese segmentartigen Deckenbleche mit den Doppel-T-Trägern vor der Montage an den Stellen 14 auf der Baustelle verbunden und anschließend diese Kombination gehoben und aufgelegt.

Diese Segmente bestehen aus aufeinander angepaßten, vorgefertigten Blechen da die Deckenelemente sehr groß sind. Durch diese Methode wird eine erhebliche Transporterleichterung erzielt. Die Verschweißung der einzelnen Blechteile erfolgt letztendlich auf der Baustelle.

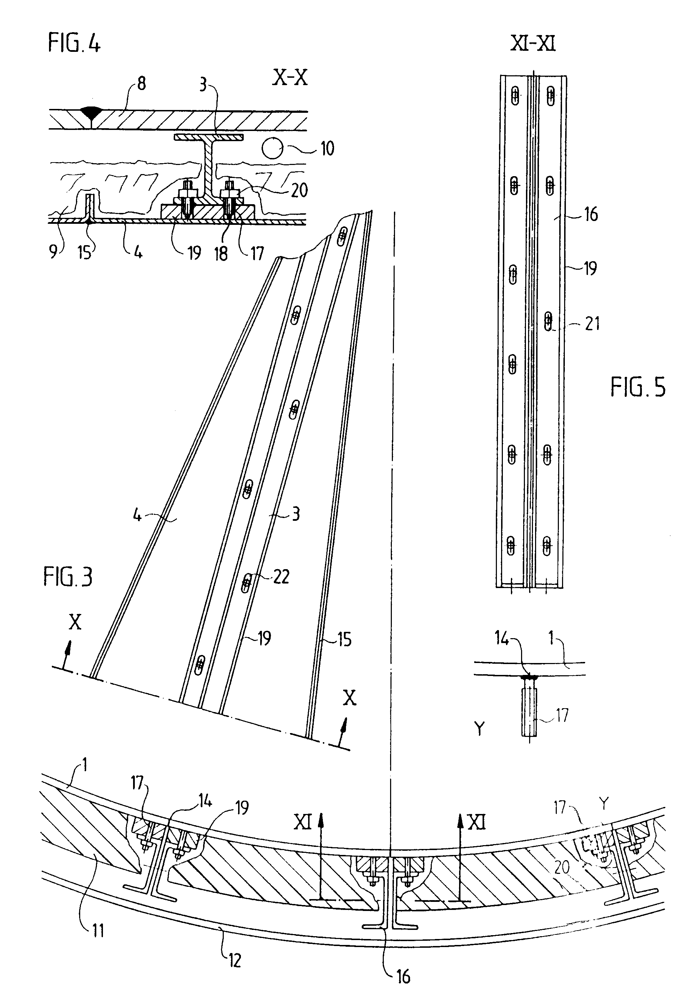

Wie aus den Figuren 1 und 4 ersichtlich, liegen auf diesen Doppel-T-Trägern Einzelbleche 8 zur Bildung des Bodens des darüberliegenden Stockwerks, die natürlich, ebenso wie die darunterliegenden Bleche 4, segmentartig ausgeführt sind. Diese Bleche sind im Vergleich zu den Blechen 4 relativ stark und müssen der Belastung im darüberliegenden Stockwerk B angepaßt sein.

Der zwischen den I-Trägern und den beiden Blechschichten entstandene Hohlraum kann durch Isolierungen 9 ausgefüllt werden, die bei geringen Ansprüchen nicht den ganzen Raum der Zwischendecke beanspruchen. In den Freiräumen oder in der Isolierung können Rohrleitungen 10 für Zu- und Abwasser verlegt werden. Die Isolierschicht ist hauptsächlich deshalb erforderlich, damit die beim Darren notwendige Wärme nicht in das Obergeschoß abfließt.

Aus dem selben Grund ist auch die Außenwand mit Isolierstoff 11 verkleidet. Zweckmäßig ist außerdem um die Außenwand, die aus den Schalen 1 besteht, noch eine zusätzliche Verkleidung 12 aufgebracht, die keine tragende Funktion, sondern als optische Verkleidung und als Schutz gegen Witterungseinflüsse dient.

Dieser prinzipielle Aufbau des unteren Stockwerks wiederholt sich bei den oberen Stockwerken, mit dem Unterschied, daß wegen der dort geringeren Belastung die Materialstärken entsprechend verringert werden können. Das gleiche gilt natürlich auch für die tragende Säule 13 für die obere Kammer B, die wie angedeutet einen geringeren Durchmesser haben kann.

Nach oben hin, also oberhalb der Verarbeitungsstockwerke kann anstelle einer nicht tragenden Abschlußdecke aber auch ein Wasserbehälter aufgesetzt werden, dessen prinzipieller Aufbau in ähnlicher Form erfolgt wie die Zwischendecken und Außenwände der unteren Stockwerke.

Bei derart großen Konstruktionen treten hauptsächlich deshalb thermische Spannungen auf, weil zumindest die Innenschalenelemente aus einer nicht rostenden Legierung und die zusätzlichen Tragprofile aus üblichem Stahl bestehen. Um solche Verspannungen zu vermeiden, werden, wie in den Figuren 3 bis 5 gezeigt, die Tragprofile mit den Blechen auf der Mantelfläche und der Decke des Behälters nicht direkt verschweißt. Die Verbindung zwischen den Tragelementen und den Schalen bzw. Deckenelementen geschieht vielmehr über Gewindebolzen 17, die auf einer Seite stumpf mit den Behälteraußenwänden z.B. durch Bolzenschweißen bei 14) fest verbunden werden. Diese Schweißmethode ist an sich bekannt und kann durch Stromstöße mit hoher Energie erfolgen, so daß die Innenseite der Bleche unter der Verschweißung nicht leidet. Die Bolzen werden zweckmäßig zunächst durch Distanzelemente 19 aus einem wärmedämmenden Material z.B. vorzugsweise aus Hartfaser und dann durch die Tragelemente hindurchgeführt und mit diesen über Muttern 20 verschraubt. Das Hartfasermaterial ist schlecht wärmeleitend und unterbricht den Wärmefluß und damit den Wärmeverlust sehr wirksam. Jedoch sind, um ein gewisses Wandern in den Tragelementen zu ermöglichen, die Löcher in diesen als Langlöcher 21 in den vertikalen Trägern 16 ausgeführt. In gleicher Art wie bei den vertikalen Trägern ist die Verbindung zwischen den Blechen 4 und den Trägern 3 bei den horizontalen Deckenelementen vorgenommen. Die Muttern sind auf eine der bekannten Methoden z.B. selbsthemmend gegen Verdrehen gesichert. Es ist auf diese Weise möglich, daß diese aus VA-Blechen bestehenden Wandelemente gegenüber den vertikalen wie auch den horizontalen Trägern bei thermischer Ausdehnung wandern können. Die Distanzelemente 19 sind vorteilhaft als durchgehende Zwischenstreifen ausgebildet, wodurch eventuell Kondensat bildende Wärmebrücken vermieden werden. Werden diese Elemente nicht vorgesehen, so bildet sich an den Stellen der Bolzen, besonders beim Darren, Kondensat. Um auch an den kleinen Bereichen der Verbindung der Schweißbolzen am Mantel Wärmebrücken und damit Kondensatbildung zu vermeiden, können unter den Muttern, die die Schlitze in den Stützen abdecken, isolierende Beilagscheiben unterlegt werden. Diese sollten einen kleinen Kragen haben, der in die Schlitzlöcher hineinragt. Diese Einzelheit ist mit Y unterhalb der Figur 5 angedeutet.

Um eine Ausdehnung in radialer und damit in Umfangsrichtung zu ermöglichen, ist außerdem dafür Vorsorge getroffen, daß die vertikalen Träger 16 am Boden radial wandern können. Dies geschieht zweckmäßig durch Gleitplatten 23, die in den ansonsten betonierten Boden eingelassen sein können.

Um auch ein Wandern der horizontalen Deckenträger 3 gegenüber der zentralen Säule 2 zu ermöglichen, sind diese dort lediglich auf die Säule aufgelegt und nicht fest mit ihr verbunden. In den äußeren Endpunkten können dagegen die vertikalen und horizontalen Tragelemente fest miteinander verbunden werden.

Durch alle diese Maßnahmen können die erwähnten thermischen Verspannungen, die sich in einem Verformen und Verwölben der dünnen Behälterwandung auswirken, sowie der erhebliche Wärmeverlust durch Wärmeleitung vom Behälterinneren zur Tragkonstruktion vermieden werden.

Falls nötig kann eine Verbindung zwischen Gleitplatten 23 und senkrechten Trägern ebenfalls über radial verlaufende Langlöcher in abgewinkelten Auflagern der Träger und Schraubbolzen an den Gleitplatten erfolgen.

### Nomenklatur

- 1: Schale, Wandelemente
- 2: Säule
- 3: Deckenträger
- 4: Segmentartige Deckenbleche
- 5.: Abkantung der Wandelemente
- 6: Winkelversteifung für Wandelemente ohne Aufkantung L-Profil
- 7: U-Profilstahl zur Versteifung
- 7a: L-Profilstahl zur Versteifung mit zusätzlicher Aufkantung
- 8: Bleche für Boden von B
- 9: Isolierung
- 10: Rohrleitung in Zwischendecke
- 11: Isolierung der Wandelemente von außen
- 12: Verkleidung aus Trapezblechen oder Profilblechen
- 13: Obere Säule mit kleineren oder gleichem Durchmesser
- 14: Verschweißung der Schalenelemente
- 15: Verschweißung der Segmentbleche Decke
- 16: U-Eisen vertikal
- 17: Gewindebolzen
- 18: Verschweißen von 17 mit 1
- 19: durchgehender Isolierstreifen (Wärme)
- 20: Muttern für 17
- 21: Langlöcher in 16
- 22: Langlöcher in 3
- 23: Bodenplatten, Gleitplatten

## Patentansprüche

1. Runder Behälter zur Aufnahme von feuchten, aggressiven Stoffen, insbesondere von Weich-, Keim- und Darreinrichtungen in Mälzereien, bei dem der Mantel des zylindrischen Behälters aus unter sich gleichen Schalenelementen, deren Höhe im Verhältnis zur Erstreckung in Umfangsrichtung vorzugsweise relativ groß ist und der gesamten Stockwerkshöhe des Behälters entspricht, besteht, die an den Kanten mit L- oder U-förmigen Profilen versteift sind, über die bei der Montage des Behälters die Verbindung in Umfangsrichtung hergestellt wird,
**dadurch gekennzeichnet,**
daß die Verbindung zwischen den Blechen (1) und den Versteifungen (6,7,7a,16) über stumpf an die Außenseite der Bleche (1) angeschweißte Bolzen (17) erfolgt, die mit einem Gewindeteil durch vertikal verlaufende Langlöcher (21) in den Profilen hindurchgreifen und dort mittels drehgesicherter Muttern (20), vorzugsweise unter Zwischenlage von wärmedämmenden Distanzelementen, verschraubt sind.

2. Runder Behälter zur Aufnahme von feuchten, aggressiven Stoffen, insbesondere von Weich-, Keim- und Darreinrichtungen in Mälzereien, bei dem die Decke des Behälters aus etwa gleichen und von einer im Zentrum des Behälters angeordneten Säule ausgehenden, segmentförmigen Blechen besteht, die in Radialrichtung mittig mit ebenfalls von der Säule ausgehenden Deckenträgern vor dem Zusammenfügen der Segmente auf der Baustelle verbunden sind,
**dadurch gekennzeichnet,**
daß die Verbindung zwischen den segmentförmigen Blechen (4) und den Deckenträgern (3) über stumpf an die Außenseite der Bleche (4) angeschweißten Bolzen erfolgt, die mit einem Gewindeteil durch radial laufende Langlöcher (22) an den Schenkeln der Deckenträger (3) hindurchgreifen und dort mittels drehgesicherter Muttern (20), vorzugsweise unter Zwischenlage von wärmedämmenden Distanzelementen verschraubt sind.

3. Runder Behälter nach Anspruch 1,
**dadurch gekennzeichnet,**
daß die Distanzelemente (19) aus durchgehenden Streifen, vorzugsweise aus isolierendem Hartfasermaterial bestehen, die zwischen den Blechen und den zugehörigen Trägern eingefügt sind.

4. Runder Behälter nach Anspruch 2,
**dadurch gekennzeichnet,**
daß die Deckenträger (3) innen an der Mittelsäule (2) angelenkt und dort vorzugsweise radial verschiebbar sind.

5. Runder Behälter nach Anspruch 1 oder 3,
**dadurch gekennzeichnet,**
daß die vertikal verlaufenden Versteifungen (6, 7, 7a) auf dem Boden des Behälters vorzugsweise unter Zwischenlage von Gleitplatten (23) radial verschiebbar aufgelagert sind.

6. Runder Behälter nach Anspruch 5,
**dadurch gekennzeichnet,**
daß eine Verschraubung zwischen Gleitplatten und senkrechten Trägern ebenfalls über radial verlaufende Langlöcher in abgewinkelten Auflagern der Träger und Schraubbolzen an den Gleitplatten erfolgt.

## Claims

1. Round container for containing wet and agressive materials, especially used for steeping, germinating and drying installations in malting houses wherein the envelope of the cylindric container is formed of equal covering clements, the hight of which in relation to there width is big and the hight is the hight of the floor of the container building and which elements are on there vertical edges reinforced by iron supports with L or U shaped profils which join the elements together
**characterised by**
the joins between the sheet metals (1) and the reinforcing iron supports (6, 7, 7a, 16) taking place by threaded bolts which are butt-seam welded to the sheet metals and which pass with here threads through elongated holes in the profils and are fastened there by self-locking nuts (20) preferably by intermediate arranged heat insulating distance-elements.

2. Round container for containing wet and agressive materials, especially used for steeping, germinating and drying installations in malting houses wherein the ceiling of the container is formed by essentially equally constituted circular-segment-shaped sheet metals which extend from a column arranged in the centre of the container and which are joined to radially from the column extenting beams (3) and are mounted befor mounting the covering elements on the site
**characterised by**
the joining between circular-segment-shaped sheet metals (4) and the ceiling beams (3) taking place by threaded, bolts, which are butt-seam welded to the sheet metals (4) and the threaded-part of which pass through elongated holes (22) in the beams (3) and are fastened there by self-locking nuts (20) preferably by intermediate arranged heat insulating distance elements

3. Circular container according to claim 1 wherein the distance-elements (19) exist of through going strips of insulating fibrematerial which are arranged between the sheet metals and the supports

4. Circular container according to claim 2, wherein the ceiling beams (3) are only lying upon the column in the centre of the container and are there preferably radially movable arranged.

5. Circular container according to claim 1 or 3 wherein the vertical reinforcing elements (6, 7, 7a) are resting radialy movable on the floor of the container preferably upon slide-plates, which are embedded in the floor.

6. Circular container according to claim 5, wherein the srew-joint between the slide-plates and the vertical profil elements is effected by elongated holes in angular end pieces of the vertical reinforcing elements and thread-bolts on the slide-plates.

## Revendications

1. Réservoir rond pour contenir des matériaux humides aggressifs, en particulier appliqué dans des installations de détrempage, de germination et de touraillage pour des malteries, l'enveloppe du réservoir cylindrique se composant d'éléments de coquille identiques entre eux ayant une hauteur de préférence proportionnément grande par rapport à l'étendue circonférentielle et correspondant à la hauteur d'étage totale du réservoir, et ayant des raidissages le long leurs bords avec des profiles en forme de L ou en forme de U appliqués pour établir la jonction en direction circonférentielle lors de l'assemblage du réservoir,
**caracterisé en ce**
que la jonction entre les tôles (1) et les raidissages (6, 7, 7a, 16) est effectuée par des boulons (17) qui sont soudés par bouts au côté exterieur des tôles (1) et traversent avec une portion filetée des trous oblongs (21) s'étendant verticalement dans les profiles et y sont vissés par des écrous (20) résistant à la rotation, de préférence par couche interposée d'entretoises calorifuges.

2. Réservoir rond pour contenir des matériaux humides aggressifs, en particulier appliqué dans des installations de détrempage, de germination et de touraillage pour des malteries, le plafond du réservoir se composant de tôles segmentaires et environ identiques partant d'un pilier disposé dans le centre du réservoir et étant jointes centriquement en direction radiale avec des poutres de plafond partant de même du pilier avant l'assemblage des segments sur le chantier,
**caracterisé en ce**
que la jonction entre les tôles (4) segmentaires et les poutres (3) de plafond est effectuée par des boulons qui sont soudés par bouts au côté exterieur des tôles et qui traversent avec une portion filetée des trous oblongs (22) s'étendant radialement dans les ailes des poutres (3) de plafond et y sont vissés par des écrous (20) résistant à la rotation, de préférence par couche interposée d'entretoises calorifuges.

3. Réservoir rond selon la revendication 1,
**caracterisé en ce**
que les entretoises (19) se composent de bandes parcourantes, de préférence de matière isolante à fibres dures, étant insérées entre les tôles et les poutres associées.

4. Réservoir rond selon la revendication 2,
**caracterisé en ce**
que les poutres (3) de plafond sont articulées au dedans du pilier central (2) et y sont déplaçable, de préférence radialement.

5. Réservoir rond selon la revendication 1 ou 3,
**caracterisé en ce**
que les raidissages (6, 7, 7a) s'étendant verticalement sont supportés sur le fond du réservoir de manière déplaçable radialement, de préférence en interposant des plaques (23) de glissement.

6. Réservoir rond selon la revendication 5,
**caracterisé en ce**
qu'un vissage entre des plaques de glissement et des poutres verticales est effectué de même par des trous oblongs s'étendant radialement dans des supports coudés des poutres et des boulons filetés dans les plaques de glissement.
